# EUROPEAN PATENT APPLICATION

(11) **EP 1 308 757 A1**
(43) Date of publication of application: **07.05.2003**
(21) Application number: 01309410.7
(22) Date of filing: 06.11.2001
(51) Int. Cl.: G02B 6/26

(54) **Fibre module apparatus and method therefor**

(71) Applicant: Agilent Technologies, Inc. (a Delaware corporation), Palo Alto, CA 94303 (US)
(72) Inventor: Keeble, Daniel John, Felixstowe, Suffolk IP11 9BU (GB); Meadowcroft, Simon, Stowmarket, Suffolk IP14 1TU (GB); Ashmore, Sonia, Colchester, Essex C05 0QX (GB)
(74) Representative: Coker, David Graeme

(57) **Abstract**

Known techniques for precise alignment of, particularly, a plurality of optical fibres with an optical component is cumbersome and time consuming due to the size of the optical fibres and the alignment with the optical component needing to be at a micron scale. The present invention therefore provides a package apparatus (10) comprising a housing (12) having one or more micro-conduits (22) in which one or more optical fibre is respectively held. The housing is provided with a protrusion (24, 26) to enable accurate location of the housing (12) with respect to the optical component.

## Description

The present invention relates to a fibre module apparatus, for example, of a type used within an optical assembly to couple an optical component to an optical fibre.

The use of optical assemblies in the field of optical communications is widespread. Optical assemblies typically comprise a number of interconnected optical components, such as optoelectronic devices, in a small package.

Interconnection of the optical components is known to be achieved using short lengths of optical fibre, i.e. it is known to couple the short lengths of optical fibre respectively to the optical components, or even other lengths of optical fibre. The coupling of the optical fibre with a given optical component needs to done with a degree of accuracy on a micron scale and so a manual process of coupling the optical fibre with the given optical component is difficult, time consuming and requires expensive, high precision instrumentation.

Consequently, to facilitate alignment, it is known to couple the optical fibre to the given optical component by means of a silicon component, the silicon component comprising a silicon v-groove formed therein to guide the optical fibre into alignment with a window through which electromagnetic radiation, such as light, propagates. The silicon component acts as an intermediary, guiding light to or from the given optical component. However, the v-groove can only guide the optical fibre in a straight line in the plane of the surface in which the v-groove is formed. Additionally, the silicon v-grove does not usually provide mechanical support for the entire length of the optical fibre, support being necessary to protect the optical fibre from thermally and/or mechanically induced stresses. Hence, it is known to couple both ends of the optical fibre and encapsulate the optical fibre in epoxy resin.

However, the above solutions are unable to facilitate coupling of a number of optical fibres in an aligned manner, the difficulty in aligning and coupling more than one optical fibre simultaneously being quite considerable. The difficulty is further increased if the pitch of the fibres being coupled needs to change, either to a single pitch or a number of different pitches.

According to a first aspect of the present invention, there is therefore provided a package apparatus for at least one optical fibre, the package comprising a housing having at least one conduit provided therein for respectively receiving the at least one optical fibre, and an alignment reference for accurately locating the at least one optical fibre with respect to an optical component.

For the avoidance of doubt, it should be understood that reference herein to an optical component is intended to include one or more optical components, optical components including optoelectronic components, for example semiconductor lasers or photodiodes. Additionally, reference to "optical" is intended to embrace electromagnetic radiation be it visible to the naked eye or not. Typically, electromagnetic radiation the propagation of which can be supported by optical fibre is preferred, for example between about 800nm and 1600nm in wavelength, but not exclusively.

The alignment reference may be any suitable means for accurately locating the at least one optical fibre with respect to the optical component. For example, the alignment reference may be a surface for abutment with a complimentary surface of the optical component, or a part of a complimentary coupling.

The at least one optical fibre may respectively fit snugly within the at least one conduit.

Preferably, the at least one conduit is a plurality of conduits for receiving a plurality of optical fibres.

Preferably, a surface of the housing adjacent an end of the at least one conduit is arranged to perform an optical function. The optical function may be reflection and/or focussing, or any other desired optical function.

Preferably, a surface of the housing adjacent an end of the at least one conduit is arranged to provide a first part of a coupling for receiving an end module. It should be understood that, by definition, the package apparatus might include the end module.

Preferably, the first part of the coupling comprises a further alignment reference for precision coupling of the housing with the end module, for example by provision of a precision reference, such as a corner.

Alternatively, the first part of the coupling may comprise a further alignment reference for precision alignment, when in use, of the housing with the optical component. As mentioned above, the optical component may be a number of optical components in an optical component package, the number of optical components being respectively automatically aligned with the at least one conduit by virtue of the optical component package comprising a complimentary second part of the package.

Preferably, the plurality of conduits comprises a constant pitch. Alternatively, the plurality of conduits comprises a pitch that changes with longitudinal position of the at least one conduit in the housing. Indeed, the pitch may change in an number of other ways, for example, laterally with respect to the housing, the change in pitch being either a continuous increment in pitch or a predetermined combination of different pitches, for example to avoid optical cross-talk between the plurality of optical fibres.

Preferably, the apparatus further comprises a further at least one conduit disposed in a different plane to the at least one conduit.

In a preferred embodiment, the package apparatus is a bridge for supporting passage of at least one optical component over a surface and providing a clearance between the surface and the housing.

According to a second aspect of the present invention, there is provided a method of coupling an optical fibre to an optical component, the method being characterised by the steps of: providing a package comprising at least one conduit pre-formed therein; inserting at least one optical fibre in the at least one conduit; disposing the package adjacent the optical component.

According to a third aspect of the present invention, there is provided a method of manufacturing a package for at least one optical fibre, the method comprising the steps of: providing a mould having a predetermined shape; filling the mould with a material so as to form the package; characterised by: when forming the package, forming at least one conduit in the package for receiving the at least one optical fibre.

It is thus possible to provide an apparatus that simplifies the process of coupling and alignment of one or more optical fibre respectively to one or more optical component. Further, by carrying the at least one optical fibres within the fibre module apparatus, the optical fibres are better protected from thermally and mechanically induced stresses, thereby increasing longevity and efficiency of performance of the optical fibres. The fibre module apparatus also provides low cost coupling and alignment and, as a bridge, the fibre module apparatus permits the optical fibre to extend safely over other components on a circuit board, thus releasing valuable space on the circuit board in a package, especially a small package. Additionally, it is possible to dispose the at least one conduit on a gradient within the housing.

At least one embodiment of the invention will now be described, by way of example only, with reference to the accompanying drawings, in which:
**Figure 1** is a schematic diagram of a fibre module apparatus constituting a first embodiment of the invention;
**Figure 2** is a schematic diagram of an underside of the apparatus of Figure 1;
**Figure 3** is an exploded view of the apparatus of Figure 1, in a second embodiment of the present invention;
**Figures 4(a) to (c)** are cross-sectional views of the apparatus of Figures 1, 2 and 3 in other embodiments of the present invention.
**Figures 5(a) to (d) are** schematic diagrams of end shapes for the apparatus of Figures 1 to 3;
**Figures 6(a) and (c)** are schematic diagrams of a coupling arrangement for the apparatus of Figures 1 to 3;
**Figure 6(b)** is a view of an end module shown in Figure 6(a) in cross-section;
**Figure 7** is a schematic diagram of a fibre bridge constituting a further embodiment of the present invention;
**Figure 8** is a schematic diagram of the fibre bridge of Figure 7 in use.

Throughout the following description identical reference numerals shall be used to identify like parts.

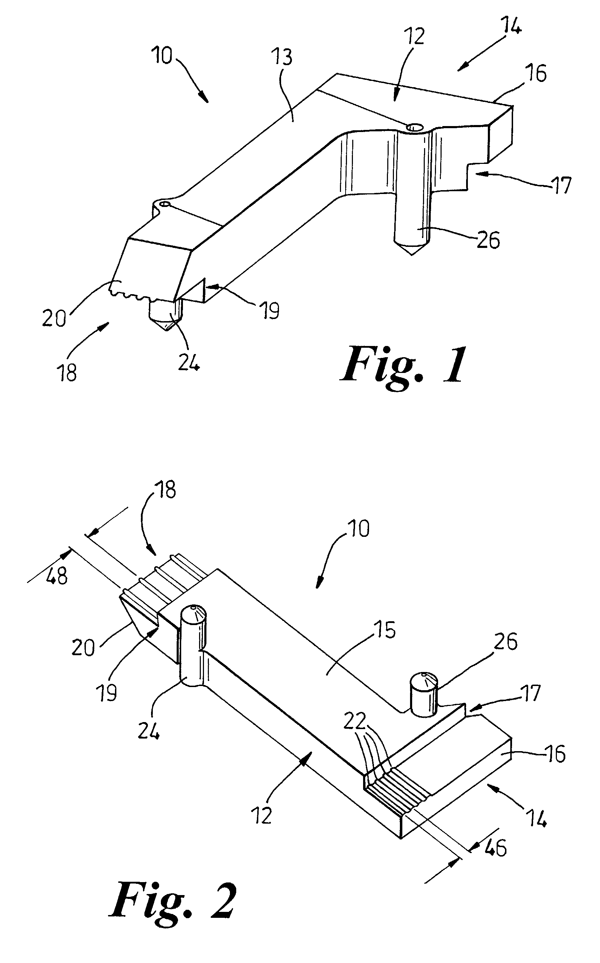

Referring to Figure 1, a fibre module apparatus 10 comprises a housing 12 formed as a single plastic moulded component carrying a number of optical fibres (not shown in Figure 1) within. The general footprint of the housing 12 is not of importance to the invention and so will not be described in further detail; the footprint can be designed to suit a particular application and/or location of the fibre module apparatus 10. The fibre module apparatus 10 comprises a first end 14 having a planar surface 16 perpendicular to a top surface 13 of the housing 12. A second end 18 of the fibre module apparatus 10 has an angled planar surface 20 that extends away from the top surface 13 at an angle of 45° therefrom (although other angles are possible); in this example, the angled planar surface 20 is highly polished. The number of optical fibres extends through an array of micro-conduits 22 (Figure 2) formed in the housing 12, the ends of the number of optical fibres adjacent the angled planar surface 20 being polished. In this example, the micro-conduits forming the array of micro-conduits 22 have a single pitch between about 0.25mm and 0.5mm and have a diameter sufficient to snugly fit the number of optical fibres therein. However, it should be understood that the diameter can be larger than the diameter of the number of optical fibres, the number of optical fibres being retained in the array of micro-conduits 22 by any suitable known optical grade adhesive, for example a compliant epoxy. The fibre optic module apparatus 10 further comprises a first alignment pin 24 and a second alignment pin 26. A bottom surface 15 of the housing 12 comprises a first step 17 at the first end 14 and a second step 19 at the second end 18 exposing the ends of the number of optical fibres respectively in the array of micro-conduits 22 (the ends of the number of optional fibres simply lie in respective U-shaped grooves). Exposure of the ends of the number of optical fibres enables, in one example, the second end 18 of the fibre module apparatus 10 to be pressed against a silicon surface comprising a respective number of U-shaped grooves to the number of optical fibres, thereby urging the number of optical fibres into the number of U-shaped grooves and reducing the positioning tolerance to that of wet-etched silicon features.

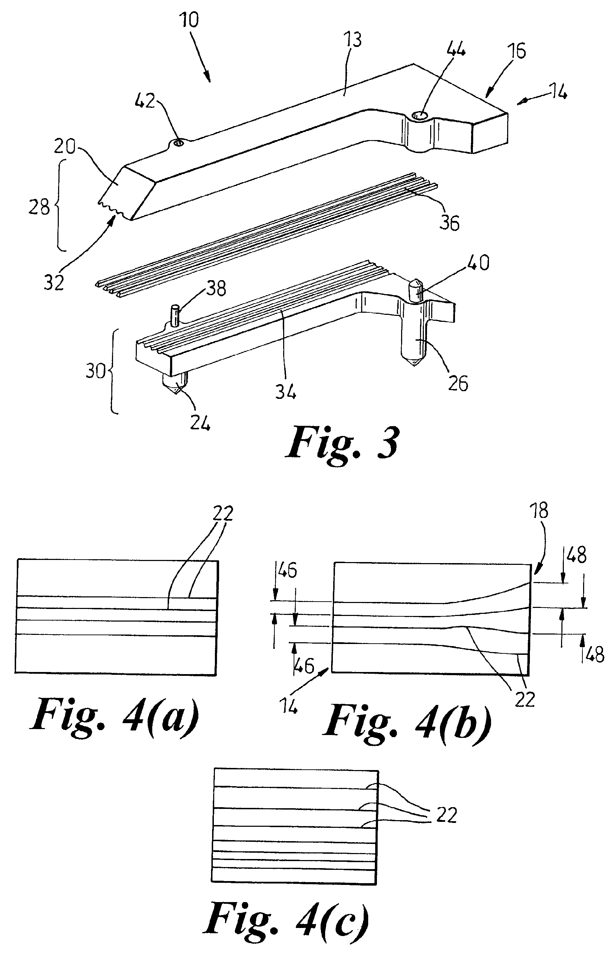

In another embodiment (Figure 3), the fibre module apparatus 10 is formed as a two-part piece comprising a first, or upper, moulded part 28 and second, lower, part 30. The first and second moulded parts 28, 30 are injection moulded from any suitable polymer material, for example Liquid Crystal Polymer (LCP). The first moulded part 28 comprises a first array of U-shaped grooves 32 integrally formed with the first moulded part 28, the first array of U-shaped grooves 32 having the single pitch. The second moulded part 30 comprises a second array of U-shaped grooves 34 for receiving the number of optical fibres 36, the second array of U-shaped grooves 34 also having the single pitch. A third alignment pin 38 and a fourth alignment pin 40 each extend from the second moulded part 30, and the first moulded part 28 comprises a first alignment hole 42 and a second alignment hole 44. The first and second alignment holes 42, 44 respectively correspond to the third and fourth alignment pins 38, 40 so as to ensure that, when the first moulded part 28 is abutted with the second moulded part 30, the first array of U-shaped grooves 32 is in registry with the second array of U-shaped grooves 34, thereby forming the array of micro-conduits 22. Of course, any other known technique can be employed to align the first array of v-shaped grooves 32 with the second array of U-shaped grooves 34.

In the examples described above in relation to Figures 1 and 3, the pitch of the array of micro-conduits 22 is the single pitch (Figure 4(a)). However, the pitch of the micro-conduits 22 of the embodiment of Figure 1, or the pitch of the first and second arrays of U-shaped channels 32, 34 of the embodiment of Figure 3 forming the array of micro-conduits 22, can vary. Referring to Figures 3 and 4(b), the array of micro-conduits 22 can have a first pitch 46 at the first end 14 of the fibre module apparatus 10 and a second pitch 48 at the second end 18, i.e. the pitch of the array of micro-conduits 22 changes with longitudinal position of the array of micro-conduits 22 in the housing 12. Consequently, the array of micro-conduits 22 can splay, or fan, outwardly from the first end 14 to the second end 18. Alternatively, the pitch of the array of micro-channels 22 can vary laterally with respect to the housing 12, i.e. the pitch of the array of micro-channels 22 can increase (Figure 4(c)). Any pitch schemes described herein need not necessarily relate to a single plane. Indeed, pitches can vary in three dimensions, a pitch scheme in a first plane being independent, if required, of another pitch scheme in another plane. Furthermore, pitches between planes is also possible and can follow any two-dimensional pitch scheme described herein.

In use, the fibre module apparatus 10 engages a circuit board (not shown) by means of complimentary alignment sockets (not shown) disposed in the circuit board to receive respectively the first and second alignment pins 24, 26. By virtue of the complimentary alignment sockets, the fibre module apparatus 10 is, in this example, positioned between a first optical component (not shown) and a second optical component, for example an array of optoelectronic devices (not shown), the first end 14 abutting the first optical component in an aligned manner and the second end 18 comprising the angled planar surface 20 positioned above the array of optoelectronic devices. The provision of the first and second alignment pins 24, 26 in combination with the controlled pitch of the number of optical fibres carried by the micro-conduits 22 result in precise alignment of the number of optical fibres with the first optical component and accurate illumination of the array of optoelectronic devices disposed beneath the second end 18. In this respect, the angled planar surface 20 is polished so that electromagnetic radiation exiting the number of optical fibres is reflected, by virtue of total internal reflection, towards the optoelectronic device. In a converse example, electromagnetic radiation emitted by the array of optoelectronic devices is reflected by the angled planar surface 20 respectively to the number of optical fibres carried by the array of micro-channels 22, the electromagnetic radiation being respectively launched into the number of optical fibres.

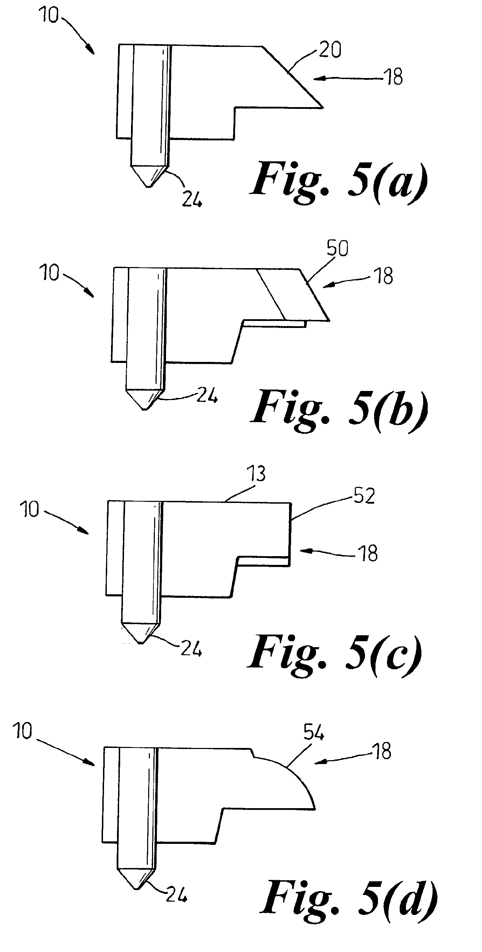

Referring to Figure 5, the second end 18 of the fibre module apparatus 10 does not necessarily have to comprise the 45° angled planar surface 20 (Figure 5(a)).

In another embodiment (Figure 5(b)), the second end 18 of the fibre module apparatus 10 comprises a biaxially tilted surface 50, i.e. the biaxially tilted surface 50 is a surface tilted about two axes (as opposed to a single axis in the case of the embodiment of Figure 5(a)). The exterior of the biaxially tilted surface 50 can be metallised. In use, electromagnetic radiation (not shown) exiting the number of optical fibres is reflected by the biaxially tilted surface 50 substantially perpendicular to the tilted surface 50, typically downwards and slightly to one side of the fibre module apparatus 10. Therefore, when aligning an optical component (not shown) with the fibre module apparatus 10, the fibre module apparatus 10 does not obscure the view of the optical device (not shown).

Referring to Figure 5(c), the second end 18 of the fibre module apparatus 10 comprises a flat surface 52 perpendicular to the top surface 13 of the housing 12 (like the planar surface 16 at the first end 14) to facilitate butt coupling of the number of optical fibres carried by the array of micro-conduits 22 with another optical component disposed at the second end 18. In this example, ends of the number of optical fibres adjacent the second end 18 are polished so as to facilitate butt coupling, for example, with other optical fibres attached to the another optical component.

Referring to Figure 5(d), the second end 18 of the fibre module apparatus 10 is shaped to comprise a curved surface 54 to reflect and focus electromagnetic radiation. In use, an optoelectronic device (not shown) is disposed beneath the second end 18 of the fibre module apparatus 10 and electromagnetic radiation exiting the number of optical fibres is focussed so as to be incident upon the optoelectronic device. In a converse example, electromagnetic radiation emitted by the optoelectronic device is reflected and focussed by the curved surface 54 so as to launch the electromagnetic radiation into the number of optical fibres carried by the array of micro-conduits 22.

The above-described shapes for the second end 18 of the fibre module apparatus can be integrally formed with the fibre module apparatus 10. Alternatively, the second end 18 of the fibre module apparatus can be formed with a first part of a coupling to cooperate with an end module carrying a second part of the coupling. The end module can bear any of the above described shapes for coupling, reflecting and/or focussing electromagnetic radiation exiting the optical fibres. Indeed, the invention is not limited to the shapes at the second end 18 of the fibre module apparatus 10, and it should be appreciated that other shapes and functions are contemplated, for example, the second end 18 can have a ferrule-like form, or any other connector shape.

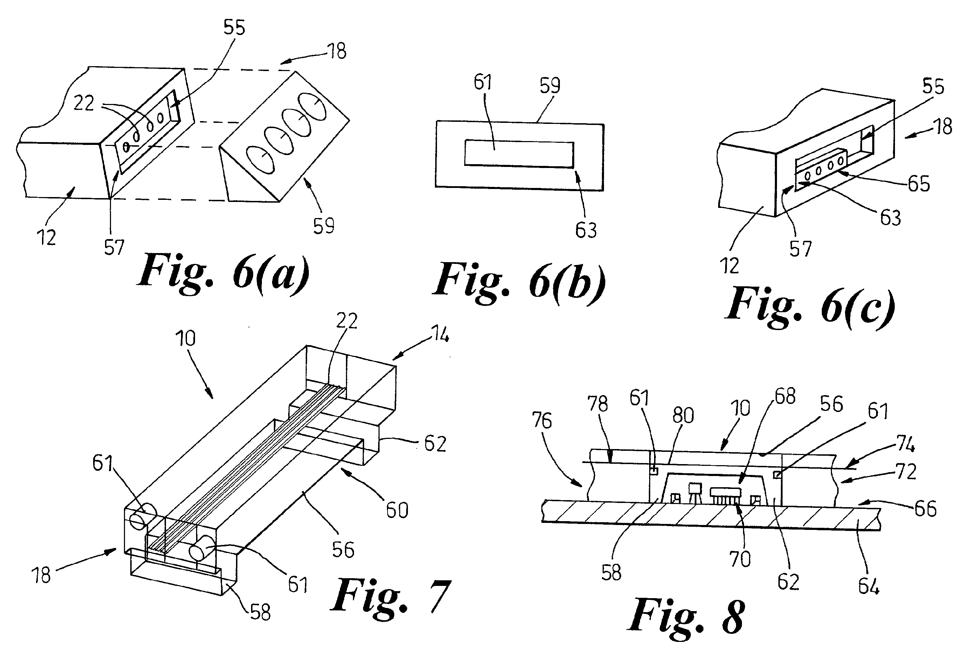

Referring to Figure 6(a), the first part of the coupling comprises a rectangular socket 55 having a precision reference corner 57 and is integrally formed with the fibre module apparatus 10. The second part (Figure 6(b)) of the coupling is integrally formed with the end module 59 and comprises, a complimentary rectangular plug 61 having a complimentary precision corner 63 for abutment into the precision reference corner 57. The fibre module apparatus 10 and the end module 59 are assembled by inserting the rectangular plug 61 into the rectangular socket 55, whilst ensuring that the complimentary precision corner 63 of the rectangular plug 61 is mated with the precision reference corner 57. The end module 59 is held in place with respect to the fibre module apparatus 10 by any known suitable optical grade adhesive. The provision of the precision reference corner 57 and the complimentary precision corner 63 ensures accurate alignment between the fibre module apparatus 10 and the end module 59.

The provision of the precision reference corner 57 can alternatively be used to accurately dispose an optical component 65 within the rectangular socket 55 in alignment with the number of optical fibres (Figure 6(c)). In this respect, the optical component 65 also comprises the complimentary precision corner 63 to ensure correct alignment between the fibre module apparatus 10 and the optical component 65.

In another embodiment (Figure 7), the fibre modules apparatus 10 is a bridge comprising an elongate body portion 56 having a first leg 58 integrally formed with an underside 60 of the body portion 56 near, or at, the first end 14 thereof, and a second leg 62 integrally formed with the underside 60 of the body portion 56 near, or at, a second end 18 thereof. As described in connection with the embodiments of Figures 1, 2 and 3, the fibre module apparatus 10 comprises the array of micro-channels 22 extending through the body portion 56, the array of micro-channels 22 carrying the number of optical fibres. The array of micro-channels can be configured to have any desired pitch(es), for example as described above in relation to Figures 1 to 4. The body portion 56 carries, in this example, two sockets 61 forming part of a coupling for coupling the fibre module apparatus 10 to other optical components. Of course, it should be appreciated that the two sockets can be pins, or indeed any other type of suitable reference to enable accurate alignment of the fibre module apparatus 10 with the other optical components, actual coupling is not essential.

In use (Figure 8), the fibre module apparatus 10 is affixed to a circuit board 64 having an upper surface 66, the first and second legs 58, 62 effectively elevating the number of optical fibres carried by the array of micro-conduits 22 above the upper surface 66 to provide a clearance 68 between the body portion 56 and the circuit board 64. A number of electrical and/or optical components 70 are attached to the upper surface 66 of the circuit board 64 in the clearance 68.

A first optical component 72 comprising a first array of optical fibres 74 is coupled adjacent the first side 14 of the body portion 56 by the coupling described above in connection with Figure 7 and a second optical component 76 comprising a second array of optical fibres 78 is coupled adjacent the second side 18 using another coupling of the type described above in connection with Figure 7, the first and second optical components 72, 76 also being affixed to the circuit board 64. Propagation of electromagnetic radiation passing between the first and second arrays of optical fibres 74, 78 is supported by the number of optical fibres 80 carried by the array of micro-channels 22 and respectively aligned with the first and second arrays of optical fibres.

As already mentioned above, the fibre optical apparatus 10 described in the above embodiments can be manufactured as a single injection moulded part, or can be moulded as a two-part piece. Moulding the fibre module apparatus 10 as the two-part piece eliminates the need to thread the number of optical fibres respectively into the array of micro-conduits 22.

Although the above embodiments have been described in the context of particular optical components being mated with the fibre module apparatus 10, it should be appreciated that the present invention is not limited to any such combinations and that many other combinations are contemplated.

## Claims

1. A package apparatus for at least one optical fibre, the package comprising a housing having at least one conduit provided therein for respectively receiving the at least one optical fibre, and alignment reference for accurately locating the at least one optical fibre with respect to an optical component.

2. An apparatus as claimed in Claim 1, wherein the at least one conduit is a plurality of conduits for receiving a plurality of optical fibres.

3. An apparatus as claimed in Claim 1 or Claim 2, wherein a surface of the housing adjacent an end of the at least one conduit is arranged to perform an optical function.

4. An apparatus as claimed in Claim 1 or Claim 2, wherein a surface of the housing adjacent an end of the at least one conduit is arranged to provide a first part of a coupling for receiving an end module.

5. An apparatus as claimed in Claim 4, wherein the first part of the coupling comprises a further alignment reference for precision coupling of the housing with the end module.

6. An apparatus as claimed in Claim 4 or Claim 5, further comprising the end module.

7. An apparatus as claimed in Claim 4, wherein the first part of the coupling comprises a further alignment reference for precision coupling of the housing with the optical component.

8. An apparatus as claimed in any one of Claims 2 to 7, wherein the plurality of conduits comprises a constant pitch.

9. An apparatus as claimed in any one of Claims 2 to 6, wherein the plurality of conduits comprises a pitch that changes with longitudinal position of the at least one conduit in the housing.

10. An apparatus as claimed in any one of the preceding claims, further comprising a further at least one conduit disposed in a different plane to the at least one conduit.

11. A bridge for at least one optical fibre, the bridge comprising the package apparatus as claimed in any one of the preceding claims.

12. A method of coupling an optical fibre to an optical component, the method being **characterised by** the steps of:
providing a package comprising at least one conduit pre-formed therein;
inserting at least one optical fibre in the at least one conduit;
disposing the package adjacent the optical component.

13. A method of manufacturing a package for at least one optical fibre, the method comprising the steps of:
providing a mould having a predetermined shape;
filling the mould with a material so as to form the package;
**characterised by**:
when forming the package, forming at least one conduit in the package for receiving the at least one optical fibre.
